(19) Europäisches Patentamt
European Patent Office
Office européen des brevets

(11) **EP 3 826 224 A1**

(12) **EUROPÄISCHE PATENTANMELDUNG**

(43) Veröffentlichungstag:
26.05.2021 Patentblatt 2021/21

(51) Int Cl.:
*H04L 9/08* (2006.01)

(21) Anmeldenummer: 20208658.3

(22) Anmeldetag: **19.11.2020**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
**KH MA MD TN**

(30) Priorität: **20.11.2019 DE 102019131317**

(71) Anmelder: **Deutsche Telekom AG**
**53113 Bonn (DE)**

(72) Erfinder:
• **GUNKEL, Matthias**
**64291 Darmstadt (DE)**
• **WISSEL, Felix**
**64372 Ober-Ramstadt (DE)**

(74) Vertreter: **Brandt & Nern Patentanwälte**
**Kekuléstrasse 2-4**
**12489 Berlin (DE)**

(54) **ÜBERTRAGUNG VON QKD-SIGNALEN IN QUANTENGESICHERTER MULTIKNOTEN-NETZTOPOLOGIE**

(57) Vorgestellt wird eine Lösung zur kosteneffizienten Übertragung von QKD-Signalen in einer quantengesicherten Netztopologie mit mindestens drei Netzknoten $(1, 2_1, ..., 2_i)$, wobei zur Erzeugung quantensicherer kryptographischer Schlüssel von einem Sender mindestens eines ersten Netzknotens (1) einzelne Photonen an jeweils einen Empfänger mindestens zweier anderer (zweiter) Netzknoten $(2_1, ..., 2_i)$ ausgesendet werden. Hierbei werden alle von dem Sender des mindestens einen ersten Netzknotens (1) ausgesendeten Photonen von derselben Photonenquelle (4) des Senders emittiert und mittels mindestens eines, eine steuerbare QKD-Weiche $(3_1, ..., 3_i)$, ausbildenden Netzelementes auf die Empfänger der zweiten Netzknoten $(2_1, ..., 2_i)$ flexibel aufgeteilt. Dies geschieht, indem die mindestes eine steuerbare QKD-Weiche $(3_1, ..., 3_i)$ die ihr über eine Lichtleitfaser (5) zugeführten Photonen ohne Beeinflussung, das heißt insbesondere ohne Messung ihrer für das verwendete QKD-Protokoll relevanten quantenmechanischen Eigenschaften, aus dieser Lichtleitfaser (5) auskoppelt und sie über jeweils eine weitere Lichtleitfaser wechselnd verschiedenen Netzelementen, nämlich einen Empfänger eines zweiten Netzknotens $(2_1, ..., 2_i)$ oder einer weiteren QKD-Weiche $(3_1, ..., 3_i)$, zuleitet.

Fig. 1

**Beschreibung**

Die Erfindung betrifft eine Lösung zur Übertragung von QKD-Signalen in einem Netzwerk mit einer quantengesicherten, mindestens drei, vorzugsweise mehr Netzknoten umfassenden Netztopologie (Multiknoten-Netztopologie). Sie betrifft ein entsprechendes Verfahren und ein zu dessen Ausführung ausgebildetes Netzwerk, welche es ermöglichen, QKD-Signale, nämlich Photonen, für eine nach dem QKD-Prinzip, also nach dem Prinzip der Quantum Key Distribution, unter Nutzung quantenmechanischer Effekte erfolgende Generierung und Verteilung kryptographischer Schlüssel kostenoptimiert zwischen einem Photonen aussendenden und mehreren Photonen empfangenden Netzknoten zu übertragen.

Für den sicheren Austausch von Daten in Netzwerken, nämlich zum abhörsicheren Verschlüsseln von Daten mit vertraulichen Informationen ("confidentiality") und zur manipulationssicheren Übertragung von Daten (integrity), welche einen Informationen aussendenden Sender zuverlässig identifizieren ("authenticity"), werden heute üblicherweise mathematische Methoden eingesetzt. Dies gilt ebenso für Kombinationen der vorgenannten Anwendungsfälle und für damit vergleichbare kryptographische Anwendungsfälle.

Die insoweit derzeit eingesetzten kryptographischen Verfahren stellen typischerweise darauf ab, dass ein Angreifer üblicherweise nicht über eine Rechentechnik verfügt, welche leistungsfähig genug wäre sie zu brechen, das heißt verschlüsselte Daten ohne Kenntnis des Schlüssels zu entschlüsseln oder den Schlüssel zu berechnen.

Dieses Kriterium für ein nach derzeitigem Stand als sicher geltendes kryptographisches Verfahren wird jedoch mit der sich beschleunigenden Entwicklung von Quantencomputern zunehmend infrage gestellt. Derartige, Effekte und Elemente der Quantenmechanik nutzende Computer werden voraussichtlich in absehbarer Zeit dazu in der Lage sein, bekannte kryptographische Verfahren in sehr kurzer Zeit zu brechen. Dem kann jedoch dadurch begegnet werden, dass man sich zur sicheren Übertragung von Daten in einem Netzwerk Verfahren bedient, welche ebenfalls quantenmechanische Prinzipien nutzen.

In diesem Zusammenhang sind unterschiedliche QKD-Verfahren, nämlich Verfahren zur Schlüsselerzeugung und Schlüsselverteilung (QKD = Quantum Key Distribution) bekannt geworden, welche entsprechende quantenmechanische Prinzipien nutzen, die sich hinsichtlich des jeweils für sie definierten Protokolls (QKD-Protokoll) und somit gegebenenfalls auch hinsichtlich der durch sie jeweils genutzten quantenmechanischen Prinzipien und Eigenschaften voneinander unterscheiden. Eines davon ist beispielsweise das Verfahren gemäß dem Protokoll BB84. Netzwerke oder Bereiche von Netzwerken, in welchen Daten unter Nutzung eines QKD-Verfahrens sicher ausgetauscht werden, bilden eine quantengesicherte Netztopologie aus.

Eine entsprechende Netztopologie umfasst zumindest zwei Netzknoten, zwischen denen über entsprechende Verbindungen ein Quantenkanal sowie ein regulärer Kanal (elektronischer digitaler Kanal herkömmlicher Prägung - im Weiteren auch als klassischer Kanal bezeichnet) ausgebildet sind. Der Quantenkanal wird dabei mittels einer Lichtleitfaser realisiert, über welche von einem Knoten mit einem Sender ausgesendete einzelne Photonen einem Empfänger des anderen Knotens zugeleitet werden.

Für die Realisierung von QKD-Verfahren mit diskreten Variablen (DV QKD) sind Einzelphotonen als Träger der quantenmechanischen Eigenschaften notwendig. Diese Eigenschaften werden, abhängig vom konkreten Protokoll, in unterschiedlicher Ausprägung für die Verteilung von abhörsicheren Schlüsseln erzeugt und verwendet. Da keine natürlichen kontrollierbaren Einzelphotonenquellen bekannt sind, muss man auf andere technische Lösungen zurückgreifen, die alle sehr aufwendig und kostspielig sind. Einzelphotonenquellen sind damit eine der kritischen Stellen im Aufbau von QKD-Netzwerken, insbesondere dann, wenn man von einem zentralen Knoten aus mehrere Empfänger mit QKD-Signalen (Photonen) versorgen will.

Da die über einen QKD-Kanal übertragenen Photonen stets nur einmal verwendet, das heißt im Zusammenhang mit ihrem Empfang bei einem Empfänger zur Bestimmung für das jeweilige Protokoll relevanter quantenmechanischer Eigenschaften nur ein einziges Mal gemessen werden können, muss ein Netzknoten, welcher in einem eine Mehrzahl von Knoten aufweisenden Netzwerk (Multiknoten-Netztopologie) mit mehreren Knoten quantengesichert Schlüssel unter Nutzung eines QKD-Verfahrens austauschen möchte, zu jedem dieser Knoten eine eigenständige Verkehrsbeziehung unterhalten.

Ein Photonen mittels eines geeigneten Senders aussendender Netzknoten wäre daher gemäß einer Möglichkeit mit jedem der anderen, ihrerseits Photonen empfangenden Netzknoten über einen schon genannten klassischen Kanal und vor allem mit je einer, jeweils von dem Photonen aussendenden Knoten ausgehenden Lichtleitfaser zur Übertragung von Photonen zu verbinden. Die Bereitstellung je einer Lichtleitfaser zu jedem der die Photonen empfangenden Knoten beziehungsweise zu deren Empfängern ist jedoch vergleichsweise aufwendig und teuer.

Eine alternative Möglichkeit bestünde darin, eine Lichtleitfaser ausgehend vom Sender des sendenden Knotens gewissermaßen von Empfänger zu Empfänger der empfangenden Knoten durchzuschleifen und die für unterschiedliche dieser Knoten bestimmten Photonen mit unterschiedlichen Wellenlängen auszusenden sowie die Photonen unterschiedlicher Wellenlänge nach dem Prinzip des WDM (WDM = Wavelength Division Multiplex) über ein und dieselbe Faser zu übertragen. Hierzu wäre aber seitens des sendenden Knotens ein Sender mit mehreren Photonenquellen unterschiedlicher Wellenlänge erforderlich. Im Hinblick auf die erforderliche Komplexität eines mehrere Photonenquellen umfassenden Senders wäre jedoch auch diese Möglichkeit sehr kostenintensiv und somit wenig effizient.

Aus der DE 694 14 864 T2, respektive aus der EP 0 717 895 T2, ist eine Lösung zur Verteilung von Quantenschlüsseln bekannt, gemäß welcher von einem Sender ausgesendete Photonen mittels passiver, die jeweiligen Quantenzustände der Photonen offenbar nicht messender 50/50 Koppler auf mehrere sie empfangende Netzknoten eines optischen Kommunikationsnetzes aufgeteilt werden. Um trotz unterschiedlicher Übertragungseigenschaften der Verbindungen zu den empfangenden Netzknoten und trotz deren unterschiedlicher Entfernungen zum Sender, bei mit steigender Entfernung steigender Dämpfung und damit sinkender Detektionsrate bezüglich eingehender Photonen, eine möglichst gleiche Verteilung der Photonen auf die empfangenden Netzwerkknoten zu erreichen, wird gemäß der in der Schrift beschriebenen Lösung die Empfindlichkeit der Detektoren/Empfänger insoweit begünstigter Empfängerknoten in Anpassung an den Netzknoten mit den schlechtesten Empfangsbedingungen reduziert. Dies führt aber dazu, dass manche der bei den Netzknoten mit verringerter Detektorempfindlichkeit eintreffenden Photonen (insoweit gemäß der in der Schrift dargestellten Lösung allerdings beabsichtigt) nicht detektiert werden und folglich ungenutzt bleiben und somit im Grunde gewissermaßen vergeudet werden.

Aufgabe der Erfindung ist es, unter Berücksichtigung der zuvor darstellten Probleme und Nachteile bekannter Lösungen, eine Möglichkeit für eine kosteneffiziente Übertragung von QKD-Signalen, namentlich von Photonen, in einer quantengesicherten Multiknoten-Netztopologie bereitzustellen. Hierfür sind ein entsprechendes Verfahren und ein zur Durchführung dieses Verfahrens geeignetes Kommunikationsnetz anzugeben.

Die Aufgabe wird durch ein Verfahren mit den Merkmalen des Patentanspruchs 1 gelöst. Ein die Aufgabe lösendes, zur Durchführung dieses Verfahrens geeignetes Netzwerk wird durch den unabhängigen Sachanspruch charakterisiert. Vorteilhafte Aus- und Weiterbildungen der Erfindung sind durch die jeweiligen Unteransprüche gegeben.

Gemäß der Aufgabe bezieht sich das zu deren Lösung vorgeschlagene Verfahren auf die Übertragung von QKD-Signalen in einer quantengesicherten Netztopologie, welche mindestens drei Netzknoten umfasst. Innerhalb dieser Netztopologie werden zur Erzeugung quantengesicherter kryptographischer Schlüssel von einem Sender mindestens eines ersten Netzknotens einzelne Photonen an jeweils einen Empfänger mindestens zweier anderer, im Weiteren auch als zweite Netzknoten bezeichneter Netzknoten ausgesendet. Der Empfänger eines solchen zweiten Netzknotens kann auch als Detektor oder QKD-Detektor bezeichnet werden, wobei der Eingang eines vom Sender des ersten Netzknotens ausgesendeten Photons bei einem Empfänger/Detektor ein Detektorereignis darstellt.

Wie bereits eingangs erläutert, existiert eine Lichtquelle, welche als Sender einzelne Photonen aussenden könnte, im Grunde nicht. Vielmehr wird ein einzelne Photonen aussendender Sender durch Anwendung spezieller Maßnahmen auf das von der Photonenquelle des Senders emittierte Licht und/oder durch das Zusammenwirken der Photonenquelle mit zusätzlichen Elementen des Senders realisiert. Zudem gilt der ebenfalls schon angesprochene Grundsatz, dass ein ausgesendetes Photon nur ein einziges Mal im Zusammenhang mit seinem Empfang durch einen Empfänger (Detektor) hinsichtlich seiner bei dem jeweiligen QKD-Verfahren genutzten quantenmechanischen Eigenschaften ausgelesen werden kann, da sich die betreffenden quantenmechanischen Eigenschaften des Photons durch einen entsprechenden Auslesevorgang unmittelbar verändern. Der jeweilige, zur Schlüsselerzeugung herangezogene Quantenzustand eines Photons wird durch einen solchen Auslesevorgang beziehungsweise eine Messung gewissermaßen zerstört, so dass der Auslesevorgang nicht verborgen bleiben kann.

Entsprechend dem hier beschriebenen Verfahren ist es aber dennoch vorgesehen, dass alle von dem Sender des vorgenannten ersten Netzknotens an die Mehrzahl (mindestens zwei) zweiten Netzknoten ausgesendeten Photonen durch dieselbe, das heißt durch eine einzige Photonenquelle des Senders des sendenden Netzknotens, emittiert werden. Da dennoch die vorgenannte Randbedingung gilt, wonach ein solches ausgesendetes Einzelphoton nur durch einen einzigen Sender beziehungsweise einmalig fehlerfrei ausgelesen werden kann, werden die von dem Sender des ersten Netzknotens ausgesendeten - wohlgemerkt von nur einer einzigen Photonenquelle emittierten - einzelnen Photonen auf die Empfänger (Detektoren) der zweiten Netzknoten aufgeteilt.

Dies geschieht mittels mindestens eines nachfolgend und in den Patentansprüchen als QKD-Weiche bezeichneten Netzelements, wobei ein solches Netzelement - wie später noch zu erläutern sein wird - eine Zwei- oder eine Mehrweg-Weiche ausbilden kann. Die mindestens eine QKD-Weiche koppelt die ihr über eine Lichtleitfaser zugeführten Photonen ohne Beeinflussung, das heißt insbesondere ohne Messung (Auslesen) ihrer für das verwendete QKD-Protokoll relevanten quantenmechanischen Eigenschaften, aus der vorgenannten Lichtleitfaser aus und leitet sie über jeweils eine weitere Lichtleitfaser wechselnd verschiedenen Netzelementen zu. Bei den letztgenannten Netzelementen handelt es sich entweder um einen (bestimmungsgemäßen) Empfänger eines der zweiten Netzknoten oder aber um eine weitere QKD-Weiche. Die vorstehend angesprochenen, für das verwendete QKD-Protokoll relevanten quantenmechanischen Eigenschaften sind diejenigen Eigenschaften, welche gemäß dem jeweiligen QKD-Protokoll zur Kodierung von geeigneten Quantensignalen verwendet und demgemäß von einem jeweiligen bestimmungsgemäßen Empfänger (Detektor) ausgelesen werden.

Eine jeweilige QKD-Weiche koppelt demnach die ihr über eine Lichtleitfaser zugeführten Einzelphotonen jeweils aus der zuführenden Lichtleitfaser auf rein optischem Wege aus, um sie dann wechselnd in unterschiedliche Lichtleitfasern, welche die QKD-Weiche mit jeweils unterschiedlichen Netzelementen (Empfänger eines Netzknotens oder weitere QKD-Weiche) verbinden, wieder (rein optisch) einzukoppeln.

An dieser Stelle sei darauf hingewiesen, dass die die Einzelphotonen mittels ihrer Empfänger empfangenden Netzknoten ebenfalls über einzelne Photonen aussendende Sender verfügen können, welche sie im Rahmen anderweiter Verkehrsbeziehungen, aber ebenfalls unter Nutzung des erfindungsgemäßen Prinzips der Verteilung dieser Einzelphotonen mittels QKD-Weichen an andere Netzknoten der jeweiligen quantengesicherten Netztopologie aussenden. Vereinfachend sollen aber in den nachfolgenden Darstellungen nur Verkehrsbeziehungen einer Übertragungsrichtung, also solche Verkehrsbeziehungen betrachtet werden, bei welchen ein erster Netzknoten beziehungsweise dessen Sender Einzelphotonen an eine Mehrzahl (mindestens zwei) zweite, diese mittels entsprechender Empfänger (Detektoren) empfangende Netzknoten aussendet. Die gegebenenfalls außerdem genutzte Gegenrichtung für das Senden von Photonen zur Generierung kryptographischer Schlüssel kann demnach außer Betracht bleiben, ohne dass dies zu einer entsprechenden Beschränkung der Erfindung führen würde, da das nachfolgend Dargestellte auch für die nicht betrachtete Gegenrichtung gilt oder gelten kann.

Zudem sollen, entsprechend den Gepflogenheiten in der Kryptographie, im Weiteren ein Photonen aussendender Netzknoten beziehungsweise dessen Sender auch als "Alice" und ein diese Photonen empfangender Netzknoten beziehungsweise dessen Empfänger beziehungsweise Detektor als "Bob" bezeichnet werden. Demgemäß sind die Teilnehmer der zuvor und nachfolgend betrachteten Verkehrsbeziehungen Alice (erster Netzknoten mit Einzelphotonen aussendendem Sender) sowie Bob 1, Bob 2 bis Bob n (Einzelphotonen von Alice mittels ihrer Empfänger empfangende zweite Netzknoten), wobei zwischen Alice und jedem der Bobs erfindungsgemäß jeweils mindestens eine QKD-Weiche angeordnet ist. Zu den hinsichtlich des Netzwerks und der/den darin angeordneten QKD-Weiche(n) möglichen Konfigurationen sollen Ausführungen im Zusammenhang mit den Darstellungen zu dem die Aufgabe lösenden, das heißt zur Durchführung des Verfahrens geeigneten Netzwerk erfolgen.

Grundsätzlich ist es möglich die von Alice ausgesendeten Photonen (Einzelphotonen) mittels der QKD-Weiche oder QKD-Weichen, wie aus dem Stand der Technik bereits bekannt, statisch gleichverteilt auf die einzelnen (mindestens zwei) Bobs aufzuteilen. Im Falle des Vorhandenseins von zwei Photonen empfangenden Bobs heißt dies, dass die von Alice ausgesendeten Photonen durch eine als Zweiweg-Weiche ausgebildete QKD-Weiche -jedenfalls statistisch betrachtet - zu jeweils 50 % dem einen und ebenfalls zu 50 % dem anderen Bob zugeleitet werden

Hiervon abweichend könnte das Verfahren auch so ausgestaltet sein, dass die von Alice ausgesendeten Photonen mittels mindestens einer QKD-Weiche zwar statisch fest, das heißt entsprechend festgelegten Leistungsanteilen, aber nicht gleichverteilt auf die Bobs aufgeteilt werden. Hierdurch könnte der Tatsache Rechnung getragen werden, dass die Bobs in einer entsprechenden Netztopologie typischerweise unterschiedlich weit entfernt von Alice angeordnet sind und die Schlüsselrate aufgrund der Dämpfung in der beziehungsweise den Lichtleitfasern exponentiell mit der Entfernung zwischen Sender und Empfänger abfällt.

Einem häufig annähernd gleichen Schlüsselbedarf der Bobs kann demnach unter Beachtung der vorgenannten Randbedingungen durch eine nicht gleichverteilte aber "faire" Aufteilung der von Alice ausgesendeten Photonen entsprochen werden. Im Einzelfall hängt die jeweils optimale (im Sinne von fairster) Schlüsselempfangsfenstergröße der Bobs (also die Länge eines Zeitintervalls, in welchem die ausgesendeten Photonen durch entsprechende Zustände der QKD-Weiche oder -Weichen einem jeweiligen Bob zugeleitet werden) von den konkreten (relativen) Abständen der Bobs, also der Photonen empfangenden Netzknoten zur Photonenquelle ab. Hierbei kann festgestellt werden, dass sich die einem Bob zugewiesene Fenstergröße invers zum exponentiellen Abstand des Bobs zu Alice verhält. Die Schlüsselrate $r_i$ des i-ten Bob sei gegeben als

$$r_i \sim e^{(-\gamma\, x_i)}$$

mit einem charakteristischen Dämpfungsbelag $\gamma$, der den Leistungsabfall über dem Ort $x_i$ geeignet beschreibt. Die effektive daraus zu generierende Schlüssellänge $k_i$ ist proportional zur Länge des Zeitfensters $\Delta t_i$ und soll im Falle für alle Bobs die gleiche sein:

$$k_i = \Delta t_i\, r_i = const$$

Deshalb ergibt sich

$$\Delta t_i \sim \frac{c\,\cdot\,e^{(\gamma\, x_i)}}{\sum_i e^{(\gamma\, x_i)}}$$

mit einer Normierungskonstanten c. Beispiel: Sollten speziell alle Bobs in festen Abständen (als Vielfache des minimalen Abstandes $x_0$ des ersten Bobs zum zentralen Knoten) platziert sein, ergibt sich für die Fensterbreite des i-ten Bob dieser Zusammenhang:

$$\Delta t_i \sim e^{(\gamma x_o) i}$$

wobei der Laufindex i die Bobs entsprechend der Anzahl der außer dem sendenden Netzknoten (Alice) vorhandenen, Photonen empfangenden Netzknoten durchzählt.

Im Falle des Vorhandenseins mehrerer, Photonen auf mehr als zwei Bobs aufteilender QKD-Weichen werden in entsprechender Ausgestaltung des Verfahrens alle QKD-Weichen über eine Control Plane, nämlich über eine sie Netzwerk-Kontrollebene, miteinander gekoppelt und synchronisiert.

Den zuvor erläuterten Möglichkeiten der Photonenverteilung ist gemeinsam, dass die Verteilung der von Alice ausgesendeten Photonen auf die Bobs entsprechend festgelegter Leistungsanteile erfolgt, wobei allerdings in diesem Kontext die Begriffe "Leistung" beziehungsweise "Leistungsanteil" sich nicht auf die Strahlungsleistung des vom Sender (Alice) in Form der einzelnen Photonen ausgesendeten Lichts bezieht. Vielmehr beziehen sich diese Begriffe auf die (statistisch gesehen) innerhalb eines betrachteten Zeitintervalls durch die mindestens eine QKD-Weiche in die eine oder andere Richtung, also einem weiteren Netzelement (zum Beispiel Empfänger eines Bobs oder Empfänger einer weiteren QKD-Weiche) zugeleitete Anzahl von Photonen, welche im Falle einer statischen (also statisch festgelegt, aber nicht zwingend gleichverteilten) Anzahl von Photonen unveränderlich ist.

Dies bringt allerdings die Einschränkung mit sich, dass der jeweils festgelegte Leistungsanteil, also die Zahl der in die eine oder andere Richtung ausgekoppelten beziehungsweise geleiteten Photonen und damit die in der jeweiligen Verkehrsbeziehung zwischen Alice und einem jeweiligen Bob erzielte Schlüsselrate nicht an sich eventuell einstellende neue Erfordernisse angepasst werden kann.

Erfindungsgemäß werden daher die von Alice ausgesendeten Photonen, unter Berücksichtigung der für die einzelnen sie mittels ihrer Empfänger empfangenden zweiten Netzknoten erzielbaren Schlüsselraten, mittels der mindestens einen, in diesem Falle aktiven, weil gesteuerten QKD-Weiche flexibel auf die Bobs aufgeteilt, das heißt insbesondere hinsichtlich des jeweiligen Leistungsanteils flexibel auf die sie empfangenden zweiten Netzknoten aufgeteilt. Im Falle des Vorhandenseins mehrerer QKD-Weichen, welche Photonen auf Empfänger von mehr als zwei anderen, das heißt zweiten Netzknoten aufteilen, werden dabei alle QKD-Weichen über eine Control Plane, nämlich über eine Netzwerk-Kontrollebene, miteinander gekoppelt sowie miteinander synchronisiert.

Soweit vorstehend, nachfolgend und in den Patentansprüchen von einem Synchronisieren des Photonen aussendenden ersten Netzknotens mit den Photonen empfangenden zweiten Netzknoten die Rede ist, sei im Hinblick darauf, dass in den Ansprüchen gleichzeitig von mindestens einem ersten Netzknoten gesprochen wird, es also mehrere erste, das heißt Photonen aussendende Netzknoten geben kann und typischerweise auch geben wird, an dieser Stelle folgendes klargestellt. Die angesprochene Synchronisation zwischen dem (einem) ersten Netzknoten und Photonen empfangenden zweiten Netzknoten bezieht sich selbstverständlich immer nur auf eine Synchronisation von Netzknoten zwischen denen im jeweils betrachteten Kontext auch eine Verkehrsbeziehung für einen Schlüsselaustausch nach einem QKD-Verfahren besteht. Ein betrachteter, Photonen aussendender Netzknoten wird nicht etwa auch mit eventuell weiteren Photonen empfangenden zweiten Netzknoten des später noch beschriebenen erfindungsgemäßen Netzwerks synchronisiert, mit denen er (jedenfalls zum betrachteten Zeitpunkt) keine Verkehrsbeziehung hat, welche also keine Photonen für einen Schlüsselaustausch von ihm empfangen. In einem betrachteten Kontext sind also stets ein erster Netzknoten ein Photonen sendender Netzknoten und zweite Netzknoten mehrere Photonen von diesem ersten Netzknoten empfangende Netzknoten.

Eine besonders vorteilhafte Ausgestaltung des Verfahrens besteht darin, die von Alice ausgesendeten Photonen dynamisch, nämlich auf der Grundlage eines bei den einzelnen Bobs jeweils bestehenden Bedarfs an kryptographischen Schlüsseln, auf die Bobs aufzuteilen. Auch hierbei bedarf es einer Control Plane, welche im Falle des Vorhandenseins mehrerer QKD-Weichen diese QKD-Weichen miteinander koppelt und einen von einem jeweiligen Bob angemeldeten Schlüsselbedarf an ein zentrales Schlüsselmanagement des Netzwerks weiterleitet. Gesteuert durch dieses zentrale Schlüsselmanagement werden dann die mindestens eine QKD-Weiche oder die mehreren QKD-Weichen nach einem Regelwerk zur Befriedigung der durch die einzelnen Bobs angemeldeten Schlüsselbedarfe dynamisch angesteuert, um die von Alice ausgesendeten Photonen entsprechend zu verteilen. Entsprechende dansteuerbare QKD-Weichen können zum Beispiel dadurch realisiert werden, dass ein hinsichtlich seiner Ausrichtung veränderlicher Spiegel in den Strahlengang der Photonen gesetzt wird, mit dessen Hilfe die bei der QKD-Weiche ankommenden Photonen je nach Ausrichtung des Spiegels auf die verschiedenen, der QKD-Weiche nachfolgenden Netzelemente aufgeteilt werden.

In weiterer Ausbildung des Verfahrens können über die Control Plane, neben den Schlüsselbedarfen, weitere Parameter zur Steuerung der QKD-Weichen und damit zur Steuerung einer flexiblen Aufteilung der von dem mindestens einen ersten Netzknoten ausgesendeten Photonen auf die empfangenden zweiten Netzknoten übertragen werden. Hierbei wird es typischerweise so sein, dass die Photonen entsprechend den gemeldeten Schlüsselbedarfen auf die empfangenden Bobs aufgeteilt werden, sofern aber nicht alle Bedarfe erfüllt werden können, die vorgenannten weiteren Parameter zur Steuerung der QKD-Weichen und damit zur Aufteilung der Photonen mit herangezogen werden. Bei diesen weiteren Parametern kann es sich beispielsweise um QoS-Parameter (mit QOS = Quality of Service) handeln, was im Grunde einer Priorisierung gleichkommt. Hierbei wird also durch eine flexible Aufteilung der Photonen, den seitens einzelner empfangender Netzknoten gegebenenfalls bestehenden Anforderungen an die QoS Rechnung getragen. Darüber hinaus können Parameter zur Berücksichtigung eventuell bestehender SLA (SLA = Service Level Agreement) über die Control Plane übertragen werden. Derartiges kommt insbesondere in Betracht im Zusammenhang mit (Photonen) empfangenden Netzknoten, welche im Besitz eines Kunden sind, wobei der betreffende Kunde besondere Anforderungen an die Anzahl und Zuverlässigkeit der Bereitstellungen von quantensicheren Schlüsseln hat, deren Sicherstellung zum Beispiel Gegenstand eines Vertrages mit dem Netzbetreiber sind und wofür gegenüber dem betreffenden Kunden regelmäßig ein höheres Entgelt berechnet werden wird. Darüber hinaus kann nach einem vergleichbaren, jedoch gegebenenfalls nicht gesondert kostenpflichtigen Prinzip Erbringern hoheitsstaatlicher Leistungen (z. B. Polizei und Feuerwehr) eine bevorzugte Zuteilung von Photonen eingeräumt werden.

Was diese weiteren, vorstehend beispielhaft genannten Parameter zur Steuerung der Aufteilung ausgesendeter Photonen anbelangt, so ist davon auszugehen, dass diese typischerweise aufgrund eines Zusammenwirkens zwischen Einrichtungen der empfangenden Netzknoten und einem übergeordneten Netzmanagement über die Control Plane an das zentrale Schlüsselmanagement übermittelt werden. Dies schließt im Einzelfalle nicht aus, dass entsprechende Anstöße zur Generierung solcher Parameter von Seiten des Netzmanagements durch Personen (Netzmanager) des Netzbetreibers gegeben werden. Die Ableitung aus entsprechenden Vorgaben resultierender Parameter und deren Übermittlung an das zentrale Schlüsselmanagement wird dann jedoch im Rahmen automatisierter Vorgänge erfolgen.

Ein zur Durchführung des erfindungsgemäßen Verfahrens geeignetes Netzwerk mit einer quantengesicherten Netztopologie weist zunächst mindestens drei Netzknoten auf und verfügt darüber hinaus über ein zentrales Schlüsselmanagement und eine Control Plane, nämlich eine Netzwerk-Kontrollebene. Bei Betrachtung wiederum nur einer Richtung der zwischen diesen Netzknoten bestehenden QKD-Beziehungen werden über diese Netztopologie zur Erzeugung quantengesicherter kryptographischer Schlüssel QKD-Signale, nämlich insbesondere (einzelne) Photonen, zwischen einem Sender eines ersten Netzknotens (Alice) und jeweils einem Empfänger der mindestens zwei anderen, das heißt zweiten Netzknoten (Bobs) übertragen.

Dabei verfügt Alice, also der Sender des ersten Netzknotens, nur über eine, alle an die mindestens zwei Bobs ausgesendeten Photonen emittierende Photonenquelle. Zwischen Alice und jedem der Bobs ist mindestens eine als Zwei- oder Mehrweg-Weiche ausgebildete QKD-Weiche angeordnet, wobei als Mehrweg-Weiche ausgebildete QKD-Weichen insbesondere in baumartigen Netztopologien mit mehr als zwei Bobs zum Einsatz kommen dürften. Bei der vorgenannten mindestens einen QKD-Weiche handelt es sich um ein Netzelement, welches dazu ausgebildet ist, die ihm über eine Lichtleitfaser zugeleiteten Photonen ohne Beeinflussung, das heißt insbesondere ohne Messung ihrer für das verwendete QKD-Protokoll relevanten quantenmechanischen Eigenschaften, aus dieser Lichtleitfaser (auf rein optischem Wege) auszukoppeln und sie wechselweise in voneinander verschiedene Lichtleitfasern wieder (rein optisch) einzukoppeln. Hierbei verbinden die letztgenannten Lichtleitfasern die QKD-Weiche jeweils mit einem anderen Netzelement, nämlich mit dem Empfänger eines Netzknotens (Bob) oder mit einer weiteren QKD-Weiche.

Wie bereits zum Verfahren erläutert, wird die von dem Sender des ersten (sendenden) Netzknotens ausgesendete Folge einzelner Photonen durch die zwischen diesem Sender und den Photonen zur Schlüsselerzeugung empfangenden zweiten Netzknoten angeordnete QKD-Weiche oder QKD-Weichen weder gleichmäßig noch statisch festgelegt, sondern flexibel, nämlich vorzugsweise dynamisch entsprechend einem von den empfangenden Netzknoten gemeldeten Schlüsselbedarf, aufgeteilt. Das erfindungsgemäße Netzwerk zeichnet sich daher dadurch aus, dass es sich bei der oder den QKD-Weichen, abweichend vom Stand der Technik, um aktive Netzelemente, das heißt um gesteuerte QKD-Weichen handelt. Das Netzwerk weist also, je nach Anzahl der empfangenden Netzknoten, auf welche die Photonen aufzuteilen sind, eine oder mehrere dynamisch gesteuerte QKD-Weichen auf. Hierbei werden die von Alice ausgesendeten Photonen durch die von dem zentralen Schlüsselmanagement dynamisch gesteuerte QKD-Weiche oder dynamisch gesteuerten QKD-Weichen an die Bobs entsprechend von diesen jeweils über die Control Plan an das zentrale Schlüsselmanagement gemeldeter Schlüsselbedarfe aufgeteilt.

Praktisch wird das dadurch realisiert, dass die QKD-Weiche oder die QKD-Weichen als flexible Leistungsteiler beziehungsweise Leistungsumschalter ausgelegt werden. Bei einem flexiblen Leistungsteiler kann dabei die Weiterleitung zu jeweils unterschiedlichen Netzelementen beispielsweise durch eine Phasenverschiebung basierend auf dem Kerr-Effekt innerhalb eines als Bestandteil einer entsprechenden QKD-Weiche vorgesehenen Mach-Zehnder-Interferometers erfolgen. Ein flexibler Leistungsschalter kann zum Beispiel dadurch realisiert werden, dass ein hinsichtlich seiner Ausrichtung veränderlicher Spiegel in den Strahlengang der Photonen gesetzt wird, mit dessen Hilfe die bei der entsprechend ausgebildeten QKD-Weiche ankommenden Photonen je nach Ausrichtung des Spiegels auf die verschiedenen, der QKD-Weiche nachfolgenden Netzelemente aufgeteilt werden.

Was die vorstehend, zum Beispiel im Zusammenhang mit der Übermittlung von Schlüsselbedarfen, schon mehrfach erwähnte Control Plane anbelangt, so können in eine solche Control Plane, gemäß einer möglichen Ausgestaltung der Erfindung, auch Verbindungen einbezogen werden, welche zur Bereitstellung eines regulären Kanals für den Datenaustausch zur Schlüsselnachbearbeitung bereits ohnehin zwischen den Netzknoten bestehen.

Bei der quantengesicherten Netztopologie des erfindungsgemäßen Netzwerks kann es sich sowohl um eine Bus-Topologie mit zumindest überwiegend als Zweiweg-Weichen ausgebildeten QKD-Weichen als auch um eine BaumTopologie mit zumindest überwiegend als Mehrweg-Weichen ausgebildeten QKD-Weichen handeln, wobei Letztere (die Mehrweg-Weichen) auf ihrer Alice abgewandten Seite über jeweils eine Lichtleitfaser mit mehr als zwei Netzelementen (bei denen es sich jeweils um einen Bob oder um eine weitere QKD-Weiche handelt) verbunden sind. Das erfindungsgemäße Netzwerk kann gemäß den vorstehenden Ausführungen Sowohl als Zweiweg-Weichen als auch als Mehrweg-Weichen ausgebildete QKD-Weichen aufweisen.

Nachfolgend sollen anhand von Zeichnungen Ausführungsbeispiele sowie nochmals einige Aspekte der Erfindung erläutert werden. In den zugehörigen Zeichnungen zeigen:

Fig. 1:      eine mögliche Ausbildungsform des erfindungsgemäßen Netzwerks mit mehreren, als Zweiweg-Weichen ausgebildeten QKD-Weichen in einer schematischen Darstellung,

Fig. 2:      die schematische Darstellung einer der QKD-Weichen des Netzwerks gemäß Fig. 1,

Fig. 3:      die schematische Darstellung einer als Mehrweg-Weiche ausgebildeten QKD-Weiche,

Fig. 4a bis 4c:      unterschiedliche Möglichkeiten der Verschaltung mehrerer QKD-Weichen,

Fig. 5:      die schematische Darstellung einer zwischen zwei Netzknoten bestehenden QKD-Beziehung,

Fig. 6:      die schematische Darstellung von zwischen einem ersten sendenden Netzknoten (Alice) und mehreren empfangenden Netzknoten (Bobs) bestehenden Verkehrsbeziehungen nach dem Stand der Technik.

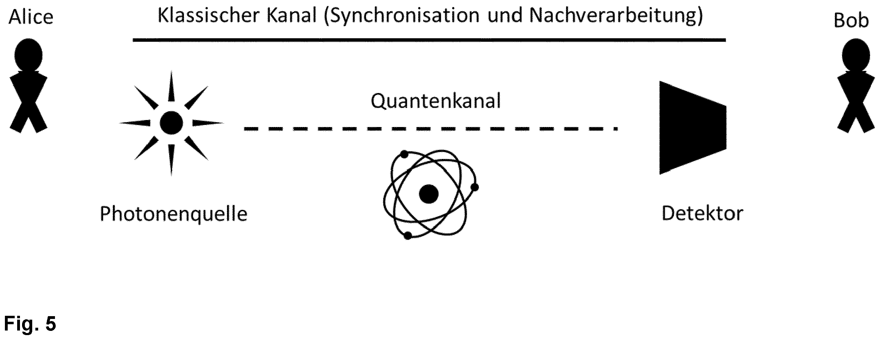

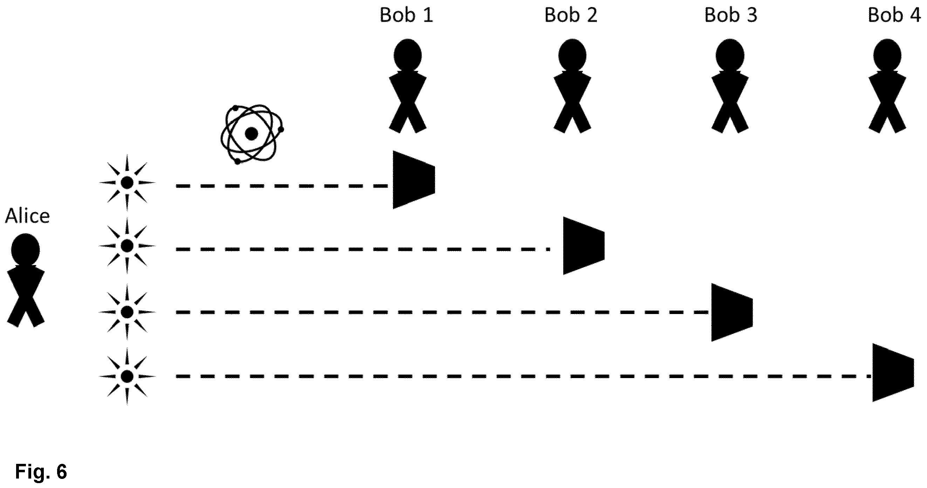

Zunächst sollen einige Ausführungen zu den Figuren 5 und 6 erfolgen, welche eine QKD-Verkehrsbeziehung bezüglich der grundsätzlichen Gegebenheiten (Fig. 5) beziehungsweise, in der Fig. 6, die Gegebenheiten nach dem Stand der Technik beim Bestehen mehrerer QKD-Verkehrsbeziehungen zwischen einem ersten sendenden Netzknoten (Alice) und mehreren empfangenden Knoten (Bobs) jeweils in einer schematischen Darstellung veranschaulichen.

In der Fig. 5 ist die zwischen Alice als einem Netzknoten mit einem Sender und Bob als einem Netzknoten mit einem Empfänger (Detektor) bei der Nutzung des Prinzips der Verteilung kryptographischer Schlüssel nach einem QKD-Verfahren bestehende Verkehrsbeziehung schematisch dargestellt. Demgemäß existiert zwischen Alice und Bob ein mittels einer Lichtleitfaser aufgebauter Quantenkanal, über welchen die von einer Photonenquelle des Senders bei Alice emittierten Photonen an Bob übertragen werden. Jedes der von Alice ausgesendeten Photonen hat quantenmechanische Eigenschaften, die sich beispielsweise in einer als eine digitale 0 oder eine digitale 1 kodierenden Polarisation des Photons manifestieren und von Bob als dem Empfänger ausgelesen (gemessen) werden.

Weiterhin existiert zwischen Alice und Bob ein klassischer (elektronischer) Kanal, über welchen sich Alice und Bob nach dem Empfang einer gewissen Anzahl von Photonen durch Bob über den jeweiligen quantenmechanischen Zustand der einzelnen von Bob empfangenen Photonen im Wege eines Vergleichs austauschen. Ergibt sich im Ergebnis dieser Vergleiche eine Mindestquote an Übereinstimmungen der jeweils miteinander verglichenen Quantenzustände der Photonen, so kann davon ausgegangen werden, dass der Quantenkanal nicht durch einen Angreifer (Eve) abgehört wurde. Die durch die von Bob empfangenen Photonen kodierten Bits werden dann als ein vertrauenswürdiger Rohschlüssel betrachtet, aus dem im Wege einer unter Datenaustausch zwischen Alice und Bob über den regulären Kanal erfolgenden Nachverarbeitung ein quantengesicherter Schlüssel erzeugt wird.

Verfügt nun Alice, wie dies in der Fig. 6 - zur Vereinfachung ohne Berücksichtigung der hierbei erforderlicher regulärer Kanäle - dargestellt ist, über QKD-Verkehrsbeziehungen zu mehreren Bobs, so wäre es dazu nach den meisten bisher angedachten, insoweit als Stand der Technik anzusehenden Konzepten erforderlich, Alice mit jedem der Bobs über eine eigene Lichtleitfaser zu verbinden. Alternativ käme, wie eingangs erläutert, noch eine gemeinsame, von Bob zu Bob durchgeschleifte Lichtleitfaser in Betracht, über welche Photonen nach dem WDM-Verfahren zu den einzelnen Bobs übertragen werden, wobei dann allerdings hierfür bei Alice entweder mehrere Photonenquellen unterschiedlicher Wellenlänge oder nur eine, -jedoch ebenfalls einen höheren Hardwareaufwand mit sich bringende - Licht variabler Wellenlänge emittierende Photonenquelle erforderlich wären. Der insoweit für beide der zuvor nochmals zusammenfassend dargestellten Übertragungsmöglichkeiten jeweils erforderliche hohe Hardwareaufwand kann jedoch durch den Einsatz der erfindungsgemäßen Lösung vermieden werden.

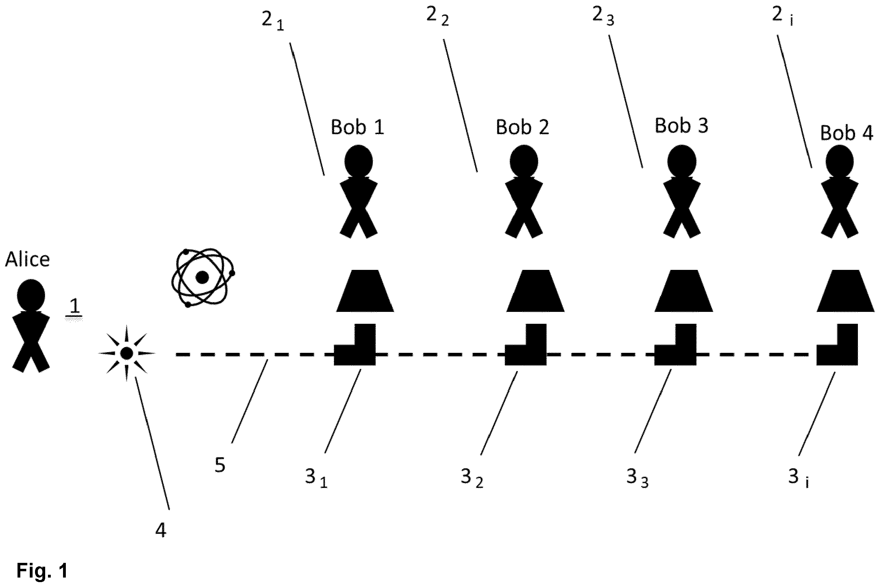

Eine mögliche Ausgestaltung eines erfindungsgemäß ausgebildeten Netzwerks ist in der Fig. 1 gezeigt.

Dabei wurde in der Zeichnung, ebenso wie bei der Fig. 6, aus Übersichtlichkeitsgründen auf die Darstellung der zwischen Alice (Netzknoten 1 mit Sender, einschließlich Photonenquelle 4) und den Bobs (Bobs 1 bis n als empfangende Netzknoten $2_1$ bis $2_i$) ebenfalls bestehenden regulären Kanäle verzichtet, zumal der Fokus der erfindungsgemäßen Lösung ohnehin auf der speziellen Gestaltung des mittels Lichtleitfasern 5 realisierten Quantenkanals beziehungsweise der Quantenkanäle liegt. Die Fig. 1 zeigt hierbei eine als Bus-Topologie aufzufassende Form einer quantengesicherten Netztopologie. Innerhalb dieser Netztopologie bestehen QKD-Verkehrsbeziehungen zwischen Alice als dem Photonen aussendenden Netzknoten 1 und mehreren Bobs als Photonen empfangende Netzknoten $2_1$ bis $2_i$.

In erfindungswesentlicher Weise ist zur Vermeidung des für die bisher bekannt gewordenen, zuvor nochmals erläuterten Konzepte noch erforderlichen Aufwands zwischen Alice 1 und jedem der Bobs $2_1$ bis $2_i$ zumindest eine QKD-Weiche $3_1$ bis $3_i$ als aktives, das heißt steuerbares Netzelement vorgesehen, wobei die QKD-Weichen $3_1$ bis $3_i$ vorliegend jeweils als Zweiweg-Weichen ausgebildet sind. Bei jeder dieser Zweiweg-Weichen handelt es sich um ein Netzelement, welches Photonen aus einer ihm diese Photonen zuleitenden Lichtleitfaser 5 auskoppelt und die jeweiligen Photonen wechselweise voneinander verschiedenen Netzelementen, im Beispiel nämlich jeweils einem Bob $2_1$ bis $2_i$ oder einer weiteren QKD-Weiche $3_2$ bis $3_i$, zuführt.

Vorzugsweise handelt es sich bei den besagten QKD-Weichen $3_1$ bis $3_i$ um dynamisch gesteuerte Weichen, welche die Photonen entsprechend einem von den einzelnen Bobs $2_1$ bis $2_i$ jeweils gemeldeten Bedarf auf die Bobs $2_1$ bis $2_i$ aufteilen. Die einzelnen, in der Fig. 1 gezeigten QDK-Weichen $3_1$ bis $3_i$ sind dazu über eine nicht gezeigte Control Plane miteinander verbunden, über welche die Bobs $2_1$ bis $2_i$ ihren jeweiligen Bedarf an quantengesicherten kryptographischen Schlüsseln an ein (ebenfalls nicht gezeigtes) übergeordnetes, das heißt zentrales Schlüsselmanagement melden sowie die einzelnen QKD-Weichen $3_1$ bis $3_i$ für eine diese Bedarfe berücksichtigende Verteilung der Photonen gesteuert werden.

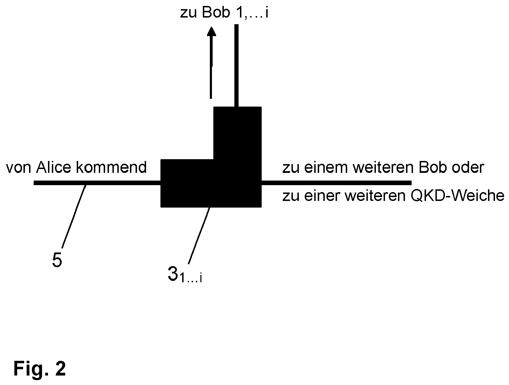

Die Fig. 2 zeigt - ebenfalls in schematischer Darstellung - nochmals als Detail eine der QKD-Weichen $3_1$ bis $3_i$ des Netzwerks gemäß der Fig. 1. Es handelt sich demgemäß um ein steuerbares Netzelement, welches die bei ihm über eine Lichtleitfaser 5 eingehenden Photonen entsprechend seiner jeweiligen Ansteuerung entweder unmittelbar an einen Bob $2_1$ bis $2_i$ oder über mindestens eine weitere QKD-Weiche $3_1$ bis $3_i$ an einen der anderen Bobs $2_1$ bis $2_i$ weiterleitet. Hierbei werden die jeweiligen Photonen durch die jeweilige QKD-Weiche $3_1$ bis $3_i$ im Hinblick auf die für das verwendete QKD-Protokoll relevanten Eigenschaften quantenmechanisch nicht beeinflusst, das heißt insbesondere nicht ausgelesen. Die Weiterleitung zu jeweils unterschiedlichen Netzelementen kann dabei beispielsweise durch eine Phasenverschiebung basierend auf dem Kerr-Effekt innerhalb eines als Bestandteil der QKD-Weiche $3_1$ bis $3_i$ vorgesehenen Mach-Zehnder-Interferometers erfolgen.

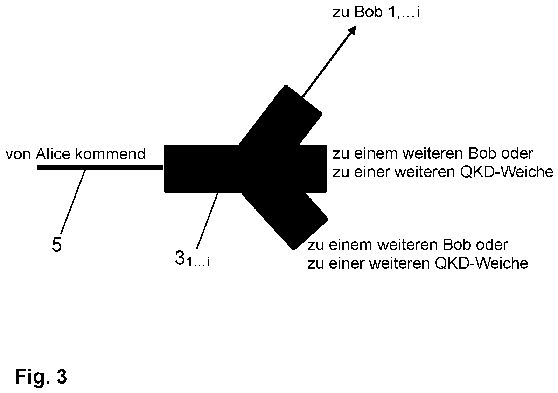

Die Fig. 3 zeigt eine andere mögliche Ausbildungsform einer QKD-Weiche $3_1$ bis $3_i$, welche beispielsweise in baumförmigen quantengesicherten Netztopologien einsetzbar ist. Hierbei ist die betreffende steuerbare QKD-Weiche $3_1$ bis $3_i$ gewissermaßen ausgangsseitig mit mehr als zwei Netzelementen verbindbar, bei denen es sich jeweils ebenfalls entweder um einen Bob $2_1$ bis $2_i$ (Netzknoten mit Empfänger für den Empfang von Photonen) oder um eine weitere QKD-Weiche $3_1$ bis $3_i$ handelt. Abweichend von der Darstellung in der Fig. 3 kann eine entsprechende, für die Verwendung in Baum-Topologien vorgesehene QKD-Weiche $3_1$ bis $3_i$ gegebenenfalls auch mehr als drei Ausgänge besitzen, das heißt die bei ihr eingehenden, durch die QKD-Weiche $3_1$ bis $3_i$ ausgekoppelten Photonen wechselnd auf mehr als drei andere Netzelemente verteilen.

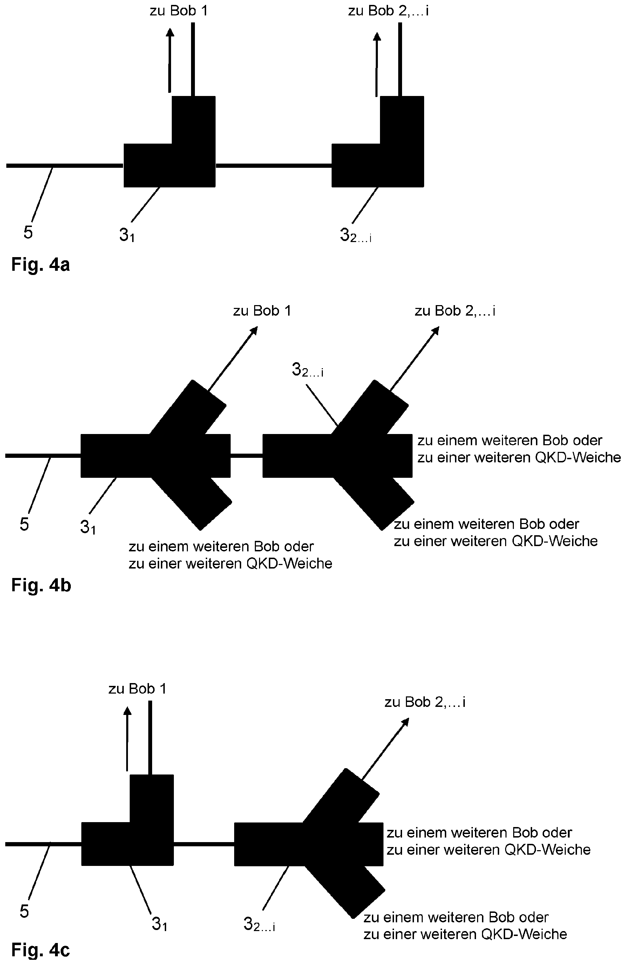

Die Fig. 4a bis 4c zeigen unterschiedliche Möglichkeiten der Verschaltung von QKD-Weichen $3_1$ bis $3_i$ entsprechend den in den Figuren 2 und 3 beispielhaft gezeigten Ausbildungsformen.

Liste der Bezugszeichen

| 1 | sendender (erster) Netzknoten (Alice) |
| $2_1$, ..., $2_i$ | empfangender (zweiter) Netzknoten (Bob) |
| $3_1$, ...,$3_i$ | QKD-Weiche |
| 4 | Photonenquelle |
| 5 | Lichtleitfaser |

Patentansprüche

1. Verfahren zur Übertragung von QKD-Signalen in einer quantengesicherten, mindestens drei Netzknoten (1, $2_1$, ..., $2_i$) umfassenden Netztopologie, gemäß welchem zur Erzeugung quantensicherer kryptographischer Schlüssel von einem Sender mindestens eines ersten Netzknotens (1) einzelne Photonen an jeweils einen Empfänger mindestens zweier anderer, das heißt zweiter Netzknoten ($2_1$, ..., $2_i$) ausgesendet werden, wobei alle von dem Sender des mindestens einen ersten Netzknotens (1) ausgesendeten Photonen von derselben Photonenquelle (4) des Senders emittiert und mittels mindestens eines, eine QKD-Weiche ($3_1$, ..., $3_i$ ausbildenden Netzelementes auf die Empfänger der zweiten Netzknoten ($2_1$, ..., $2_i$) aufgeteilt werden, indem die mindestes eine QKD-Weiche ($3_1$, ..., $3_i$) die ihr über eine Lichtleitfaser (5) zugeführten Photonen ohne Beeinflussung, das heißt insbesondere ohne Messung ihrer für das verwendete QKD-Protokoll relevanten quantenmechanischen Eigenschaften, aus dieser Lichtleitfaser (5) auskoppelt und sie über jeweils eine weitere Lichtleitfaser wechselnd verschiedenen Netzelementen zuleitet, bei denen es sich jeweils um einen Empfänger eines zweiten Netzknotens ($2_1$, ..., $2_i$) oder um eine weitere QKD-Weiche ($3_1$, ..., $3_i$) handelt, **dadurch gekennzeichnet, dass** die Photonen des Senders des mindestens einen ersten Netzknotens (1) mittels der mindestens einen QKD-Weiche ($3_1$, ..., $3_i$) unter Berücksichtigung der für die einzelnen sie mittels ihrer Empfänger empfangenden zweiten Netzknoten ($2_1$, ..., $2_i$) erzielbaren Schlüsselraten flexibel aufgeteilt werden, wobei im Falle des Vorhandenseins mehrerer QKD-Weichen ($3_1$, ..., $3_i$), welche Photonen auf Empfänger von mehr als zwei anderen Netzknoten, das heißt zweiten Netzknoten ($2_1$, ..., $2_i$), aufteilen, alle QKD-Weichen ($3_1$, ..., $3_i$) über eine Control Plane, nämlich über eine Netzwerk-Kontrollebene, miteinander gekoppelt sowie miteinander synchronisiert werden.

2. Verfahren nach Anspruch 1, **dadurch gekennzeichnet, dass** die Photonen des Senders des mindestens einen ersten Netzknotens (1) mittels der mindestens einen QKD-Weiche ($3_1$, ..., $3_i$), entsprechend einem an ein zentrales Schlüsselmanagement gemeldeten Bedarf dynamisch auf die Photonen empfangenden zweiten Netzknoten ($2_1$, ..., $2_i$) aufgeteilt werden.

3. Verfahren nach Anspruch 2, wobei die Meldung der jeweiligen Schlüsselbedarfe an das zentrale Schlüsselmanagement im Falle des Vorhandenseins mehrerer QKD-Weichen ($3_1$, ..., $3_i$), welche die ausgesendeten Photonen auf mehr als zwei Photonen empfangende zweite Netzknoten ($2_1$, ..., $2_i$) aufteilen, über die Control Plane erfolgt.

4. Verfahren nach Anspruch 3, wobei an das zentrale Schlüsselmanagement über die Control Plane, neben den Schlüsselbedarfen, weitere Parameter zur Steuerung der QKD-Weichen ($3_1$, ..., $3_i$) und damit zur Steuerung der flexiblen Aufteilung der von dem mindestens einen ersten Netzknoten (1) ausgesendeten Photonen auf die empfangenden zweiten Netzknoten ($2_1$, ..., $2_i$) übertragen werden.

5. Netzwerk mit einer quantengesicherten, mindestens drei Netzknoten (1, $2_1$, ..., $2_i$) umfassenden Netztopologie, über welche zur Erzeugung quantensicherer kryptographischer Schlüssel QKD-Signale zwischen einem Sender mindestes eines ersten Netzknotens (1) und jeweils einem Empfänger zweier anderer, das heißt zweiter Netzknoten ($2_1$, ..., $2_i$) übertragen werden, wobei

     - das Netzwerk ein zentrales Schlüsselmanagement und eine Control Plane, nämlich eine Netzwerk-Kontrollebene, aufweist und
     - der Sender des mindestens einen ersten Netzknotens (1) nur über eine, alle an die Empfänger der zweiten Netzknoten ($2_1$, ..., $2_i$) ausgesendeten Photonen emittierende Photonenquelle (4) verfügt und

- zwischen dem Sender des mindestens einen ersten Netzknotens (1) und jedem Photonen von diesem Sender empfangenden Empfänger eines zweiten Netzknotens ($2_1$, ..., $2_i$) mindestens eine QKD-Weiche ($3_1$, ..., $3_i$) angeordnet ist, bei welcher es sich um ein Netzelement handelt, welches dazu ausgebildet ist, die dem Netzelement über eine Lichtleitfaser (5) zugeführten Photonen ohne Beeinflussung, das heißt insbesondere ohne Messung ihrer für das verwendete QKD-Protokoll relevanten quantenmechanischen Eigenschaften, aus dieser Lichtleitfaser (5) auszukoppeln und sie wechselnd in voneinander verschiedene, die QKD-Weiche ($3_1$, ..., $3_i$) jeweils mit einem anderen Netzelement, nämlich mit dem Empfänger eines zweiten Netzknotens ($2_1$, ..., $2_i$) oder mit einer weiteren QKD-Weiche ($3_1$, ..., $3_i$), verbindende Lichtleitfasern einzukoppeln,

**dadurch gekennzeichnet, dass**
es sich bei der oder den als Zwei- oder Mehrweg-Weichen ausgebildeten QKD-Weichen ($3_1$, ..., $3_i$) um dynamisch durch das zentrale Schlüsselmanagement gesteuerte Netzelemente handelt, welche dazu ausgebildet sind, die vom Sender des mindestens einen ersten Netzknotens (1) ausgesendeten Photonen, gesteuert durch das zentrale Schlüsselmanagement, auf die Empfänger der Photonen empfangenden zweiten Netzknoten ($2_1$, ..., $2_i$) entsprechend von diesen zweiten Netzknoten ($2_1$, ..., $2_i$) jeweils über die Control Plane an das zentrale Schlüsselmanagement gemeldeter Schlüsselbedarfe flexibel aufzuteilen.

6. Netzwerk nach Anspruch 5 mit mehreren QKD-Weichen, **dadurch gekennzeichnet, dass** dieses sowohl als Zweiweg-Weichen ausgebildete als auch als Mehrweg-Weichen ausgebildete QKD-Weichen umfasst.

7. Netzwerk nach Anspruch 5 oder 6, **dadurch gekennzeichnet, dass** in die Control Plane Verbindungen einbezogen werden, welche zur Realisierung eines Kanals für den Datenaustausch zur Schlüsselnachbearbeitung bereits zwischen den Netzknoten (1, $2_1$, ..., $2_i$) bestehen.

8. Netzwerk nach einem der Ansprüche 5 bis 7, **dadurch gekennzeichnet, dass** es sich bei der quantengesicherten Netztopologie um eine Bustopologie mit zumindest überwiegend als Zweiweg-Weichen ausgebildeten QKD-Weichen ($3_1$, ..., $3_i$) handelt oder um eine Baumtopologie mit zumindest über-

**EP 3 826 224 A1**

wiegend als Mehrweg-Weichen ausgebildeten QKD-Weichen ($3_1$, ..., $3_i$), die auf ihrer dem mindestens einen ersten Netzknoten (1) mit dem Sender abgewandten Seite mit mehr als zwei Netzelementen über jeweils eine Lichtleitfaser verbunden sind.

**Fig. 1**

zu Bob 1,…i

von Alice kommend

zu einem weiteren Bob oder
zu einer weiteren QKD-Weiche

5

$3_{1…i}$

**Fig. 2**

zu Bob 1,…i

von Alice kommend

zu einem weiteren Bob oder
zu einer weiteren QKD-Weiche

5

$3_{1…i}$

zu einem weiteren Bob oder
zu einer weiteren QKD-Weiche

**Fig. 3**

zu Bob 1          zu Bob 2,...i

5          3₁          3₂...ᵢ

**Fig. 4a**

zu Bob 1          zu Bob 2,...i

3₂...ᵢ

5          3₁

zu einem weiteren Bob oder
zu einer weiteren QKD-Weiche

zu einem weiteren Bob oder
zu einer weiteren QKD-Weiche

zu einem weiteren Bob oder
zu einer weiteren QKD-Weiche

**Fig. 4b**

zu Bob 1          zu Bob 2,...i

zu einem weiteren Bob oder
zu einer weiteren QKD-Weiche

5          3₁          3₂...ᵢ

zu einem weiteren Bob oder
zu einer weiteren QKD-Weiche

**Fig. 4c**

Fig. 5

Fig. 6

Europäisches Patentamt
European Patent Office
Office européen des brevets

**EUROPÄISCHER RECHERCHENBERICHT**

Nummer der Anmeldung

EP 20 20 8658

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | Alejandro Aguado ET AL: "Quantum-Aware Software Defined Networks", , 12. September 2016 (2016-09-12), XP055624788, Gefunden im Internet: URL:http://www.gcc.fi.upm.es/others/qcrypt 2016_abstract.pdf [gefunden am 2021-04-07] * Seite 1 - Seite 3 * ----- | 1-8 | INV. H04L9/08 |
| X | EP 3 528 429 A1 (HUAWEI TECH CO LTD [CN]) 21. August 2019 (2019-08-21) * Abbildungen 1,2, 5 * * Absatz [0047] - Absatz [0071] * ----- | 1-8 | |
| X | LOPEZ VICTOR ET AL: "Applying QKD to improve next-generation network infrastructures", 2019 EUROPEAN CONFERENCE ON NETWORKS AND COMMUNICATIONS (EUCNC), IEEE, 18. Juni 2019 (2019-06-18), Seiten 283-288, XP033597272, DOI: 10.1109/EUCNC.2019.8802060 * Absatz [0III] * ----- | 1-8 | |
| A | AGUADO A ET AL: "GMPLS network control plane enabling quantum encryption in end-to-end services", 2017 INTERNATIONAL CONFERENCE ON OPTICAL NETWORK DESIGN AND MODELING (ONDM), IFIP, 15. Mai 2017 (2017-05-15), Seiten 1-6, XP033107958, * Absatz [000I] - Absatz [0VII] * ----- -/-- | 1-8 | |

**RECHERCHIERTE SACHGEBIETE (IPC)**

H04L

Der vorliegende Recherchenbericht wurde für alle Patentansprüche erstellt

| Recherchenort | Abschlußdatum der Recherche | Prüfer |
|---|---|---|
| München | 7. April 2021 | Bec, Thierry |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

........................................................................
& : Mitglied der gleichen Patentfamilie, übereinstimmendes Dokument

EPO FORM 1503 03.82 (P04C03)

Seite 1 von 2

Europäisches Patentamt

European Patent Office

Office européen des brevets

**EUROPÄISCHER RECHERCHENBERICHT**

Nummer der Anmeldung

EP 20 20 8658

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | NATIONAL INSTITUTE OF INFORMATION AND COMMUNICATIONS TECHNOLOGY (NICT) NEC CORPORATION TOSHIBA CORPORATION: "Quantum Key Distribution", ITU-T DRAFT; STUDY PERIOD 2017-2020; STUDY GROUP 13, INTERNATIONAL TELECOMMUNICATION UNION, GENEVA ; CH , 12. Dezember 2018 (2018-12-12), Seiten 1-15, XP044259703, Gefunden im Internet: URL:https://www.itu.int/ifa/t/2017/sg13/exchange/QKD/Quantum_Key_Distribution.pdf [gefunden am 2018-12-12] * Seite 12 - Seite 15 * ----- | 1-8 | |
| A | CAO Y ET AL: "SDQAAS: Software defined networking for quantum key distribution as a service", OPTICS EXPRESS 2019 OSA - THE OPTICAL SOCIETY USA, Bd. 27, Nr. 5, 2019, Seiten 6892-6909, XP002802616, DOI: 10.1364/OE.27.006892 * Zusammenfassung * ----- | 1-8 | |
| T | Matthias Gunkel, Felix Wissel, Andreas Poppe: "IEEE", , 9. Mai 2019 (2019-05-09), XP002802617, Gefunden im Internet: URL:https://ieeexplore.ieee.org/stamp/stamp.jsp?arnumber=8727121 [gefunden am 2021-04-07] ----- | | |

RECHERCHIERTE SACHGEBIETE (IPC)

Der vorliegende Recherchenbericht wurde für alle Patentansprüche erstellt

| Recherchenort | Abschlußdatum der Recherche | Prüfer |
|---|---|---|
| München | 7. April 2021 | Bec, Thierry |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 20 20 8658

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-04-2021

| Im Recherchenbericht angeführtes Patentdokument | Datum der Veröffentlichung | Mitglied(er) der Patentfamilie | Datum der Veröffentlichung |
|---|---|---|---|
| EP 3528429 A1 | 21-08-2019 | CN 108023725 A | 11-05-2018 |
| | | CN 112217637 A | 12-01-2021 |
| | | EP 3528429 A1 | 21-08-2019 |
| | | JP 6773904 B2 | 21-10-2020 |
| | | JP 2020501413 A | 16-01-2020 |
| | | JP 2021010179 A | 28-01-2021 |
| | | KR 20190073520 A | 26-06-2019 |
| | | US 2019260581 A1 | 22-08-2019 |
| | | WO 2018082345 A1 | 11-05-2018 |

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 69414864 T2
- EP 0717895 T2